# EUROPEAN PATENT SPECIFICATION

(11) **EP 3 517 777 B1**
(45) Date of publication and mention of the grant of the patent: **01.09.2021**
(21) Application number: 18382054.7
(22) Date of filing: 30.01.2018
(51) Int. Cl.: F03D 80/60, F28D 15/02

(54) **MULTISIPHON PASSIVE COOLING SYSTEM**
PASSIVKÜHLUNGSSYSTEM MIT MULTISIPHON
SYSTÈME DE REFROIDISSEMENT PASSIF MULTISIPHON

(43) Date of publication of application: 31.07.2019
(73) Proprietor: General Electric Company, Schenectady, NY 12345 (US)
(72) Inventor: WADDELL, Alistair Martin, 85748 Garching b. Munchen (DE); CHAN, Mark Aaron, 85748 Garching b. Munchen (DE); ANDONEGI ALDAZ, Mikel, 08005 Barcelona (ES)
(74) Representative: de Rooij, Mathieu Julien

(56) References cited:
- WO-A1-2010/139597
- WO-A1-2016/116204
- CN-A- 101 325 118
- CN-U- 202 483 806
- CN-U- 206 309 535
- US-A1- 2016 128 231

## Description

### BACKGROUND OF THE INVENTION

Embodiments of the present invention relate generally to a passive cooling system and more particularly to a multisiphon passive cooling system for a wind turbine.

Many known devices (*e.g*., generators, rectifiers, inverters and transformers) are used for conversion of electric power. Rectifiers are used for converting alternating current (AC) to direct current (DC) and inverters are used for converting DC current to AC current. Typically, rectifiers and inverters are integrated into full power conversion assemblies (*i.e.,* power converters) used in renewable electric power generation facilities such as solar power generation farms and wind turbine farms. These devices typically generate large amounts of heat during power generation. At least some known power generating devices use a liquid cooling system for cooling the main heat generating components. These liquid cooling systems include an active pump for pumping a working liquid for cooling the power devices, and these systems may also include fans and valves. In such a system, maintaining a flow rate of the working liquid in two or more branches of the liquid cooling system may be problematic due to high resistance to a flow of the working liquid in some branches in comparison to low resistance to the flow of the working liquid in other branches.

Prior art examples are disclosed in US2016/128231A1 and CN206309535U.

A liquid cooling system employing pumps, fans and/or valves is classified as an active system. The term 'active" referring to the mechanical action performed by the pump to circulate the liquid cooling medium, or the forced airflow by the fan. All active systems require periodic maintenance, and this is critical for system reliability. For example, if a pump fails then the entire cooling system will fail to satisfactorily cool the heat generating components. This is especially problematic for off-shore wind turbines that have limited opportunities for access and maintenance.

### BRIEF DESCRIPTION OF THE INVENTION

In accordance with one aspect, a cooling system includes one or more heat generating components located within a nacelle of a wind turbine. A first conduit is thermally connected to one or more of the heat generating components, and the first conduit is fluidly connected to a distribution manifold and a condensing unit. The condensing unit is located external to the the nacelle of a wind turbine and above the heat generating components. The distribution manifold is located below the heat generating components. A second conduit is fluidly connected to the condensing unit and the distribution manifold. The cooling system includes a two-phase cooling medium. The first conduit, condensing unit, second conduit and distribution manifold form a loop in which the cooling medium circulates.

In accordance with another aspect, a cooling system includes one or more heat generating components located within an enclosure. A first conduit is thermally connected to one or more of the heat generating components. The first conduit is fluidly connected to a distribution manifold and a condensing unit. The condensing unit is located external to the enclosure and above the heat generating components, and the distribution manifold is located below the heat generating components. A second conduit is fluidly connected to the condensing unit and the distribution manifold. The cooling system is comprised of a two-phase cooling medium, and the first conduit, condensing unit, second conduit and distribution manifold form a loop in which the cooling medium circulates without the need of a pump or fan.

### BRIEF DESCRIPTION OF THE DRAWINGS

These and other features and aspects of the disclosed invention will become better understood when the following detailed description is read with reference to the accompanying drawings in which like characters represent like parts throughout the drawings.
FIG. 1 illustrates a perspective view of one embodiment of a wind turbine, according to an aspect of this disclosure.
FIG. 2 illustrates a schematic view of a cooling system, according to an aspect of this disclosure.
FIG. 3 illustrates a schematic view of a cooling system, according to an aspect of this disclosure.
FIG. 4 is a schematic view of the first conduit and a heat exchanger thermally connected to heat generating component, according to an aspect of the present disclosure.
FIG. 5 is a schematic view of the cooling system incorporating a funnel or scoop on top of the nacelle to increase airflow velocity through the condensing unit, according to an aspect of the present disclosure.

### DETAILED DESCRIPTION OF THE INVENTION

Reference now will be made in detail to aspects/embodiments of the invention, one or more examples of which are illustrated in the drawings. Each example is provided by way of explanation of the invention, not limitation of the invention.

In general, the present subject matter is directed to a passive cooling system for the heat generating components in a wind turbine. The system is completely passive and does not require a pump or fan to circulate a cooling fluid. In this manner, the cooling system described herein is very reliable, requiring very little, if any, maintenance.

Aspects discussed herein disclose a cooling and heat dissipation system having a thermosiphon including one or more cooling loops, where each cooling loop includes at least one heat generating component. Such a cooling system may be used for thermal management of a power converter, transformer, gearbox or generator. Additionally, the cooling and heat dissipation system may be used for thermal management of a hermetically sealed motor (e.g., a pitch or yaw drive) or the like. The cooling system includes a first conduit, a condensing unit, a second conduit and a distribution manifold all connected into a loop. The condenser is disposed above the first and second conduits and heat generating components that are thermally connected to the first conduit. It should be noted herein that the term "above" as used herein means the condenser is physically located at a higher location with respect to the first conduit and heat generating components. The condensing unit is used to receive the two-phase fluid from the first conduit and/or a vapor spreader, and dissipate the extracted heat to an ambient atmosphere to produce a single-phase fluid. It should be noted herein that the term "single-phase fluid" refers to a liquid medium. Similarly, the term "two-phase fluid" may refer to a mixture of liquid and gaseous mediums, or a gaseous medium.

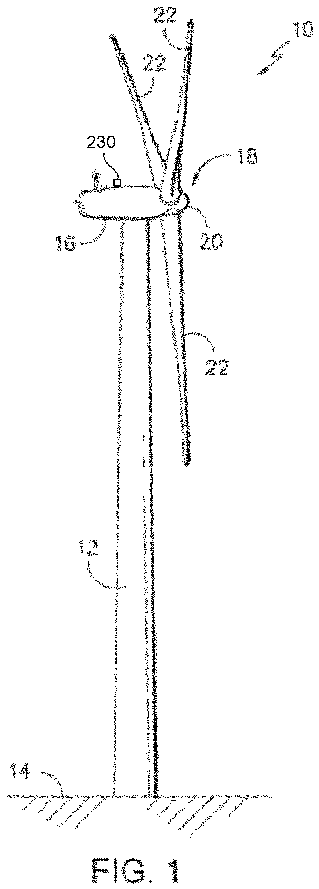

Referring now to the drawings, FIG. 1 illustrates a side view of a wind turbine 10. As shown, the wind turbine 10 generally includes a tower 12 extending from a support surface 14 (e.g., the ground, a concrete pad, offshore platform or any other suitable support surface). In addition, the wind turbine 10 may also include a nacelle 16 mounted on the tower 12 and a rotor 18 coupled to the nacelle 16. The rotor 18 includes a rotatable hub 20 and at least one rotor blade 22 coupled to and extending outwardly from the hub 20. For example, the rotor 18 may include three rotor blades 22 (as shown). However, the rotor 18 may include more or less than three rotor blades 22. Each rotor blade 22 is spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator (not shown) positioned within the nacelle 16 to permit electrical energy to be produced.

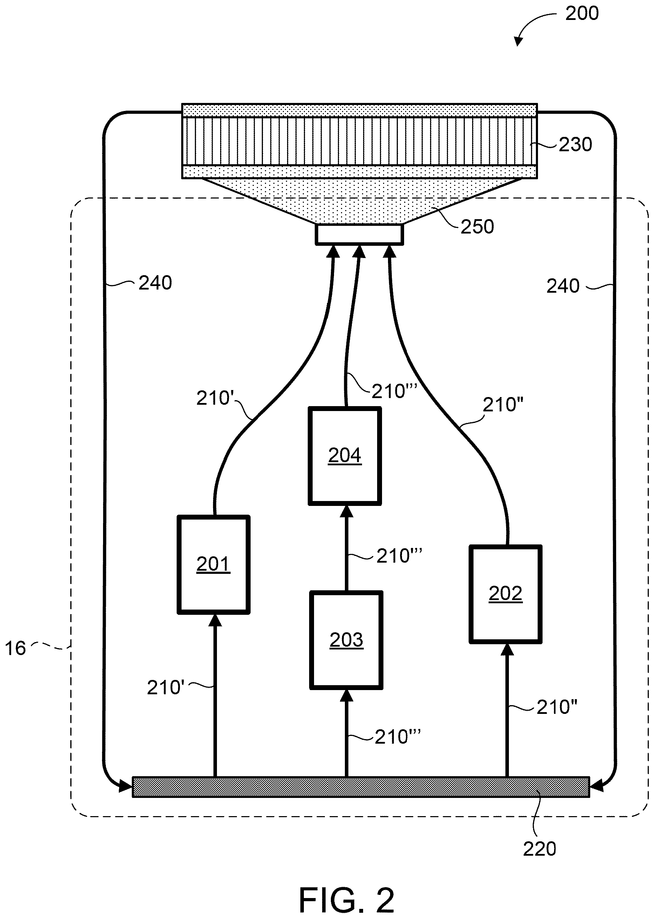

FIG. 2 illustrates a schematic view of a cooling system 200, according to an aspect of this disclosure. Various components in the nacelle (or enclosure) 16 need to be cooled. These heat generating components include a transformer 201, converter 202, gearbox 203 or generator 204. The specific components shown are one example only, and nacelles may omit certain heat generating components or add others. For example, a direct drive wind turbine does not have a gearbox as the rotor is connected directly to the generator, so the gearbox would be omitted in this embodiment. As shown in FIG. 2, all the heat generating components 201-204 are located or housed within the enclosure 16.

Each heat generating component 201-204 is thermally connected to a first conduit 210, and the first conduit 210 is fluidly connected to a distribution manifold 220 and a condensing unit 230 which is located external to enclosure 16 and above the heat generating components 201-204. A second conduit 240 is fluidly connected to the condensing unit 230 and the distribution manifold 220. The conduits 210, 240 contain a two-phase cooling medium that turns gaseous and rises as it heats up by absorbing thermal energy from the heat generating components 201-204, and the cooling medium changes back to a liquid state as it cools in the condensing unit 230.

A first loop exists with first conduit 210', transformer 201, condensing unit 230, second conduit 240 and distribution manifold 220. A second loop exists with first conduit 210", converter 202, condensing unit 230, second conduit 240 and distribution manifold 220. A third loop exists with first conduit 210"', gearbox 203, generator 204, condensing unit 230, second conduit 240 and distribution manifold 220. The multiple first conduits 210', 210", 210''' form parallel flow paths between the distribution manifold and the condensing unit. Individual paths may have heat generating components connected in series, as shown with first conduit 210''' and gearbox 203 and generator 204. The cooling medium is in its liquid state in distribution manifold 220, and the distribution manifold is the lowest element in the system as gravity is used to collect and return the liquid cooling medium to the distribution manifold 220. Liquid cooling medium is also present in the lower portions of first conduits 210. As the wind turbine operates the heat generating components 201-204 generate heat and this heat is transferred to the cooling medium. The cooling medium will phase change to a gaseous state and naturally forms a thermosiphon as the gases rise up first conduits 210 towards condensing unit 230.

The condensing unit 230 is located external to the enclosure 16 (or nacelle) and is exposed to natural convective cooling by the wind. The gaseous cooling medium in condensing unit 230 cools down and phase changes back to its liquid state, which is denser than the gaseous state. This liquid cooling medium falls back down second conduit 240 towards the distribution manifold 220. The natural forces of convection are the driving force of circulation for the cooling medium. Hot vapor rises up to the condensing unit 230, and cooler liquid falls back down to the distribution manifold 220 via second conduits 240. No pump or fan is needed to circulate the cooling medium in cooling system 200. Hotter components also self-regulate the flow rate of cooling medium passing through the first conduit. A hotter component will evaporate more cooling medium than a cooler component, resulting in a higher cooling medium flow rate in hotter vs. cooler heat generating components. Cooling medium flow rate automatically adjusts based on the need of the individual heat generating component.

A vapor spreader 250 may also be interposed between and fluidly connected to the first conduits 210 and the condensing unit 230. The vapor spreader 250 is a diffuser that enables the gaseous cooling medium to expand and efficiently fill the condensing unit. The vapor spreader also reduces the pressure of the vapor and reduces its condensing temperature. The vapor spreader 250 may be housed within the enclosure 16, housed partly within and external to the enclosure 16, or entirely external to the enclosure. The vapor spreader 250 may be attached to the enclosure/nacelle 16 (as shown in FIG. 2) or the condensing unit may be attached to the enclosure/nacelle 16.

The two-phase cooling medium has a boiling point of about 60 °C or lower. The temperature range of the boiling point is chosen to sufficiently cool electronic components (e.g., transformers, converters, etc.), and prevent them from overheating. Coolants with higher boiling points (e.g., water with a boiling point of 100 °C) get too hot before they phase change to a gas, and result in over-temperature situations for electronic components. Examples of satisfactory cooling mediums are dodecafluoro-2-methylpentan-3-one (e.g., 3M™ Novec™ 649, trademarks of 3M), Novec™ 7000, or a fluid with a chemical composition of CF₃CF₂C(O)CF(CF₃)₂. Other less environmentally friendly alternatives could be 1,1,1,2-tetrafluoroethane, R-134a, 2,3,3,3-Tetrafluoropropene, or HFO-1234yf, however, these may not exist in a liquid state for the desired time period or in the desired temperature range.

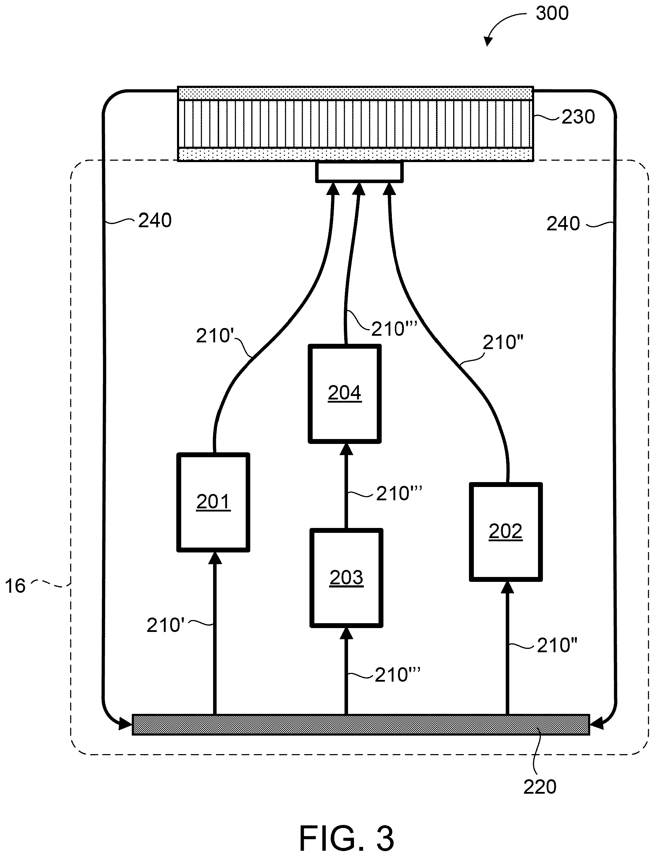

FIG. 3 illustrates a schematic view of a cooling system 300, according to an aspect of this disclosure. The condensing unit 230 is attached to the enclosure or nacelle 16 and the vapor spreader (as shown in FIG. 2) is omitted. The first conduits 210 fluidly connect directly to the condensing unit 230. One advantage of this embodiment (and the embodiment shown in FIG. 2) is that the nacelle 16 may be sealed. External vents allowing air into the nacelle 16 are not required, and this could be a big advantage in sandy, dusty or salt-water environments. The sealed nacelle greatly reduces or eliminates contaminants from entering the interior of the nacelle, and this is very advantageous to the various components (i.e., the generator, transformer, converter, etc.) housed therein. Yet another advantage to the cooling systems 200, 300 is that the condensing unit 230 need only be higher than the upper portion of first conduits 210, to enable natural convective flow. This enables the condensing unit 230 to be attached directly to the top of the nacelle 16. Large or substantial height differentials between the condensing unit 230 and the heat generating components 201-204 are not required for the system to function properly. It can be very problematic to permanently elevate (e.g., on top of a pole) the condensing unit due to the substantial wind loads sustained at elevations above the nacelle. The condensing unit 230 is much more stable, secure and reliable when attached either directly to the nacelle or to the nacelle via vapor spreader 250. Orienting the condensing unit 230 normal to the wind flow removes the need for an electric fan. When the wind is blowing at a reduced rate, the associated heat load to dissipate will also be reduced.

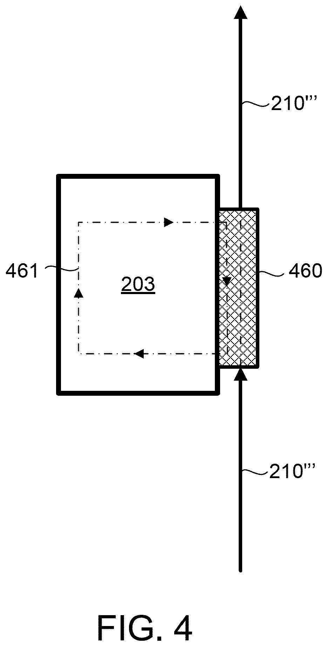

FIG. 4 is a schematic view of the first conduit 210 and a heat exchanger 460 thermally connected to heat generating component 203, according to an aspect of the present disclosure. The heat exchanger 460 may be a loop or spiral of first conduit 210 in thermal connection with component 203, or the heat exchanger may comprise separate cooling loop that circulate heat transfer mediums. For example, heat exchanger 460 may include a heat transfer loop 461 that passes in or around the component 203. The loop 461 may be configured in a counter-flow arrangement (as shown) with respect to first conduit 210, or a cross flow arrangement where heat transfer medium in loop 461 travels generally orthogonal to flow in first conduit 210. The loop 461 and conduit 210 may also be configured in a parallel-flow arrangement, where both flows travel in the same direction. The heat transfer medium in loop 461 may be air or fluid, or the heat transfer from component 203 to heat exchanger 460 may occur through a radiative or conductive effect. For example, a highly heat conductive material (e.g., copper or aluminum) can be attached to the component and the first conduit may be embedded within or attached to the highly heat conductive material. Additional heat exchangers 460 (and respective first conduits) may be thermally attached to each heat generating component desired to be cooled.

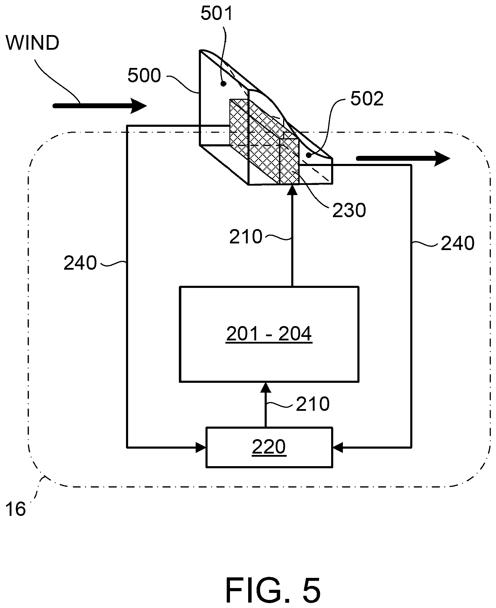

FIG. 5 is a schematic view of the cooling system incorporating a funnel 500 (or scoop) on top of the nacelle 16 to increase airflow velocity through the condensing unit 230, according to an aspect of the present disclosure. The funnel 500 is attached to and located on the top of the enclosure/nacelle 16 and increases a speed of airflow through the condensing unit 230 when compared to airflow speed external to the enclosure/nacelle 16. The condensing unit 230 is located inside the funnel 500, and an inlet area of an inlet side 501 of the funnel 500 is greater than an outlet area of the outlet side 502. The inlet side 501 is upwind of the outlet side 502. Wind, or airflow, entering the inlet side 501 will increase in velocity as it travels axially (and downstream) along the funnel 500, and eventually this airflow exits through outlet side 502. Simply put, the funnel 500 (e.g., a hood) catches more wind, and then funnels this wind over/through the condensing unit 230. This increases the air velocity over the condensing unit 230 and permits a reduction in the size of the condensing unit, compared to applications that do not use a funnel 500. Additionally, the funnel 500 allows for reduction of the internal pressure in the cooling system by reducing the condensing unit temperature. Airflow through the funnel 500 does not enter the nacelle 16, but rather passes along or near the top of the nacelle.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. The terms "about" and "approximately" as applied to a particular value of a range applies to both values, and unless otherwise dependent on the precision of the instrument measuring the value, may indicate +/- 10% of the stated value(s).

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A passive cooling system (200, 300) comprising:
one or more heat generating components (201, 202, 203, 204)located within a nacelle of a wind turbine;
a first conduit (210) thermally connected to one or more of the heat generating components (201, 202, 203, 204), the first conduit (210) fluidly connected to a distribution manifold (220) and a condensing unit (230); the condensing unit (230) located external to the nacelle of a wind turbine and above the heat generating components (201, 202, 203, 204), the distribution manifold (220) located below the heat generating components (201, 202, 203, 204);
a second conduit fluidly connected to the condensing unit (230) and the distribution manifold (220);
and
wherein the cooling system (200, 300) is comprised of a two-phase cooling medium, and the first conduit (210), condensing unit (230), second conduit (240) and distribution manifold (220) form a loop in which the cooling medium circulates, **characterised in that** the second conduit (240) is different from the first conduit (210).

2. The cooling system (200, 300) of claim 1, the heat generating components (201, 202, 203, 204) comprising one or more of:
a generator, a gearbox, a transformer, a converter, or a hermetically sealed motor.

3. The cooling system (200, 300) of claim 2, further comprising a plurality of heat generating components (201, 202, 203, 204) and a plurality of first conduits (210) connected in parallel between the distribution manifold (220) and the condensing unit (230).

4. The cooling system (200, 300) of claim 3, further comprising:
two or more heat generating components (203, 204) connected in series along a first conduit (210).

5. The cooling system (200, 300) of claim 1, further comprising a vapor spreader (250) configured as a diffuser, the vapor spreader interposed between and fluidly connected to the first conduit (210) and the condensing unit (230).

6. The cooling system (200, 300) of claim 1, further comprising a vapor spreader (250) configured as a diffuser, the vapor spreader (250) interposed between and fluidly connected to a plurality of first conduits (210) and the condensing unit (230).

7. The cooling system (200, 300) of claim 6, wherein the vapor spreader (250) is attached to the nacelle (16).

8. The cooling system (200, 300) of claim 5, wherein the condensing unit (230) is attached to the nacelle (16).

9. The cooling system (200, 300) of claim 1, the two-phase cooling medium having a boiling point of about 60 °C or lower, or the two-phase cooling medium comprises dodecafluoro-2-methylpentan-3-one, or a fluid with a chemical composition of CF3CF2C(0)CF(CF3)2.

10. The cooling system (200, 300) of claim 1, further comprising:
a funnel (500) located on the top of the nacelle (16), the condensing unit (230) located inside the funnel (500); and
wherein an inlet area of the funnel (500) is greater than an outlet area of the funnel (500), thereby increasing a speed of airflow through the condensing unit (230) when compared to airflow speed external to the nacelle (16).

11. The cooling system (200, 300) of claim 1, further comprising:
a heat exchanger (460) thermally connected to a heat generating component (201, 202, 203, 204) and to the first conduit (210), wherein the heat exchanger (460) includes a heat transfer loop (461) that passes in or around the heat generating component (201, 202, 203, 204); and
a heat transfer medium contained in the heat transfer loop (461).

12. The cooling system (200, 300) of claim 11, wherein the heat transfer medium in the heat transfer loop (461) travels orthogonal to the flow in the first conduit (210).

13. The cooling system (200, 300) of claim 11, wherein the heat transfer medium in the heat transfer loop (461) travels in the same direction of the flow in the first conduit (210); or in counter-flow arrangement with respect to the first conduit (210).

14. The cooling system (200, 300) of claim 11, wherein the heat transfer from the heat generating component (201, 202, 203, 204) to heat exchanger (460) occurs through a radiative or conductive effect.

15. A wind turbine (10) comprising a cooling system (200, 300) according to any of the preceding claims, the wind turbine (10) comprising:
a tower (12) extending from a support surface (14);
the nacelle (16) mounted on the tower (12); and
a rotor (18) coupled to the nacelle (16).

## Patentansprüche

1. Passivkühlungssystem (200, 300), umfassend:
eine oder mehrere wärmeerzeugende Komponenten (201, 202, 203, 204), die innerhalb einer Gondel einer Windkraftanlage angeordnet sind;
eine erste Leitung (210), die thermisch mit einer oder mehreren der wärmeerzeugenden Komponenten (201, 202, 203, 204) verbunden ist, wobei die erste Leitung (210) strömungstechnisch mit einem Verteiler (220) und einer Kondensationseinheit (230) verbunden ist; wobei sich die Kondensationseinheit (230) außerhalb der Gondel einer Windkraftanlage und oberhalb der wärmeerzeugenden Komponenten (201, 202, 203, 204) befindet, wobei sich der Verteiler (220) unterhalb der wärmeerzeugenden Komponenten (201, 202, 203, 204) befindet;
eine zweite Leitung, die fluidisch mit der Kondensationseinheit (230) und dem Verteiler (220) verbunden ist;
und
wobei das Kühlsystem (200, 300) aus einem Zwei-Phasen-Kühlmedium besteht und die erste Leitung (210), die Kondensationseinheit (230), die zweite Leitung (240) und der Verteiler (220) eine Schleife bilden, in der das Kühlmedium zirkuliert, **dadurch gekennzeichnet, dass** sich die zweite Leitung (240) von der ersten Leitung (210) unterscheidet.

2. Kühlsystem (200, 300) nach Anspruch 1, wobei die wärmeerzeugenden Komponenten (201, 202, 203, 204) eines oder mehrere der Folgenden umfassen:
einen Generator, ein Getriebe, einen Transformator, einen Konverter, oder einen hermetisch abgedichteten Motor.

3. Kühlsystem (200, 300) nach Anspruch 2, welches ferner eine Vielzahl von wärmeerzeugenden Komponenten (201, 202, 203, 204) und eine Vielzahl von ersten Leitungen (210) umfasst, die parallel zwischen dem Verteiler (220) und der Kondensationseinheit (230) angeschlossen sind.

4. Kühlsystem (200, 300) nach Anspruch 3, ferner umfassend:
zwei oder mehr wärmeerzeugende Komponenten (203, 204), die entlang einer ersten Leitung (210) in Reihe geschaltet sind.

5. Kühlsystem (200, 300) nach Anspruch 1, das ferner einen Dampfverteiler (250) umfasst, der als Diffusor konfiguriert ist, wobei der Dampfverteiler zwischen der ersten Leitung (210) und der Kondensationseinheit (230) angeordnet und mit diesen fluidisch verbunden ist.

6. Kühlsystem (200, 300) nach Anspruch 1, ferner umfassend einen Dampfverteiler (250), der als ein Diffusor konfiguriert ist, wobei der Dampfverteiler (250) zwischen einer Vielzahl von ersten Leitungen (210) und der Kondensationseinheit (230) angeordnet und mit diesen fluidisch verbunden ist.

7. Kühlsystem (200, 300) nach Anspruch 6, wobei der Dampfverteiler (250) an der Gondel (16) befestigt ist.

8. Kühlsystem (200, 300) nach Anspruch 5, wobei die Kondensationseinheit (230) an der Gondel (16) angebracht ist.

9. Kühlsystem (200, 300) nach Anspruch 1, wobei das Zwei-Phasen-Kühlmedium einen Siedepunkt von etwa 60 °C oder niedriger hat oder das Zwei-Phasen-Kühlmedium Dodecafluor-2-methylpentan-3-on umfasst, oder a Flüssigkeit mit der chemischen Zusammensetzung CF3CF2C(0)CF(CF3)2.

10. Kühlsystem (200, 300) nach Anspruch 1, ferner umfassend:
einen Trichter (500), der sich oben auf der Gondel (16) befindet, wobei sich die Kondensationseinheit (230) innerhalb des Trichters (500) befindet; und
wobei eine Einlassfläche des Trichters (500) größer ist als eine Auslassfläche des Trichters (500), wodurch eine Geschwindigkeit des Luftstroms durch die Kondensationseinheit (230) im Vergleich zur Luftstromgeschwindigkeit außerhalb der Gondel (16) erhöht wird.

11. Kühlsystem (200, 300) nach Anspruch 1, ferner umfassend:
einen Wärmetauscher (460), der thermisch mit einer wärmeerzeugenden Komponente (201, 202, 203, 204) und mit der ersten Leitung (210) verbunden ist, wobei der Wärmetauscher (460) eine Wärmeübertragungsschleife (461) umfasst, die in die wärmeerzeugende Komponente (201, 202, 203, 204) hinein- oder um diese herumgeführt ist; und
ein Wärmeübertragungsmedium, das in der Wärmeübertragungsschleife (461) enthalten ist.

12. Kühlsystem (200, 300) nach Anspruch 11, wobei sich das Wärmeübertragungsmedium in der Wärmeübertragungsschleife (461) orthogonal zur Strömung in der ersten Leitung (210) bewegt.

13. Kühlsystem (200, 300) nach Anspruch 11, wobei sich das Wärmeübertragungsmedium in der Wärmeübertragungsschleife (461) in derselben Richtung wie die Strömung in der ersten Leitung (210); oder in einer Gegenstromanordnung in Bezug auf die erste Leitung (210) bewegt.

14. Kühlsystem (200, 300) nach Anspruch 11, wobei die Wärmeübertragung von der wärmeerzeugenden Komponente (201, 202, 203, 204) zum Wärmetauscher (460) durch einen Wärmestrahlungs- oder -leiteffekt erfolgt.

15. Windkraftanlage (10), umfassend ein Kühlsystem (200, 300) nach einem der vorhergehenden Ansprüche, wobei die Windkraftanlage (10) umfasst:
einen Turm (12), der sich von Stützfläche (14) erstreckt;
die Gondel (16), die auf dem Turm (12) montiert ist; und
einen Rotor (18), der mit der Gondel (16) verbunden ist.

## Revendications

1. Système de refroidissement passif (200, 300) comprenant :
un ou plusieurs composants générateurs de chaleur (201, 202, 203, 204) situés à l'intérieur d'une nacelle d'une éolienne ;
un premier conduit (210) relié thermiquement à un ou plusieurs des composants générateurs de chaleur (201, 202, 203, 204), le premier conduit (210) étant relié fluidiquement à un collecteur de distribution (220) et à une unité de condensation (230) ; l'unité de condensation (230) étant située à l'extérieur de la nacelle d'une éolienne et au-dessus des composants générateurs de chaleur (201, 202, 203, 204), le collecteur de distribution (220) étant situé au-dessous des composants générateurs de chaleur (201, 202, 203, 204) ;
un second conduit relié fluidiquement à l'unité de condensation (230) et au collecteur de distribution (220) ;
et
dans lequel le système de refroidissement (200, 300) est composé d'un milieu de refroidissement à deux phases et le premier conduit (210), l'unité de condensation (230), le second conduit (240) et le collecteur de distribution (220) forment une boucle dans laquelle circule le milieu de refroidissement, **caractérisé en ce que** le second conduit (240) est différent du premier conduit (210).

2. Système de refroidissement (200, 300) selon la revendication 1, les composants générateurs de chaleur (201, 202, 203, 204) comprenant un ou plusieurs éléments parmi :
un générateur, une boîte de vitesses, un transformateur, un convertisseur ou un moteur scellé hermétiquement.

3. Système de refroidissement (200, 300) selon la revendication 2, comprenant en outre une pluralité de composants générateurs de chaleur (201, 202, 203, 204) et une pluralité de premiers conduits (210) reliés en parallèle entre le collecteur de distribution (220) et l'unité de condensation (230).

4. Système de refroidissement (200, 300) selon la revendication 3, comprenant en outre :
deux composants générateurs de chaleur (203, 204) ou plus, reliés en série le long d'un premier conduit (210).

5. Système de refroidissement (200, 300) selon la revendication 1, comprenant en outre un diffuseur de vapeur (250) conçu comme un propagateur, le diffuseur de vapeur étant interposé entre le premier conduit (210) et l'unité de condensation (230) et relié fluidiquement à ceux-ci.

6. Système de refroidissement (200, 300) selon la revendication 1, comprenant en outre un diffuseur de vapeur (250) conçu comme un propagateur, le diffuseur de vapeur (250) étant interposé entre une pluralité de premiers conduits (210) et l'unité de condensation (230) et relié fluidiquement à ceux-ci.

7. Système de refroidissement (200, 300) selon la revendication 6, dans lequel le diffuseur de vapeur (250) est fixé à la nacelle (16).

8. Système de refroidissement (200, 300) selon la revendication 5, dans lequel l'unité de condensation (230) est fixée à la nacelle (16).

9. Système de refroidissement (200, 300) selon la revendication 1, le milieu de refroidissement à deux phases ayant un point d'ébullition d'environ 60 °C ou moins ou le milieu de refroidissement à deux phases comprend du dodécafluoro-2-méthylpentane-3-one ou un fluide avec une composition chimique de CF3CF2C(0)CF(CF3)2.

10. Système de refroidissement (200, 300) selon la revendication 1, comprenant en outre :
un entonnoir (500) situé sur le dessus de la nacelle (16), l'unité de condensation (230) étant située à l'intérieur de l'entonnoir (500) ; et
dans lequel une zone d'entrée de l'entonnoir (500) est supérieure à une zone de sortie de l'entonnoir (500), ce qui augmente la vitesse d'un flux d'air à travers l'unité de condensation (230) par rapport à la vitesse de flux d'air à l'extérieur de la nacelle (16).

11. Système de refroidissement (200, 300) selon la revendication 1, comprenant en outre :
un échangeur de chaleur (460) relié thermiquement à un composant de génération de chaleur (201, 202, 203, 204) et au premier conduit (210), dans lequel l'échangeur de chaleur (460) comprend une boucle de transfert de chaleur (461) qui passe dans le composant générateur de chaleur (201, 202, 203, 204) ou autour de celui-ci ; et
un milieu de transfert de chaleur contenu dans la boucle de transfert de chaleur (461).

12. Système de refroidissement (200, 300) selon la revendication 11, dans lequel le milieu de transfert de chaleur dans la boucle de transfert de chaleur (461) se déplace orthogonalement au flux dans le premier conduit (210).

13. Système de refroidissement (200, 300) selon la revendication 11, dans lequel le milieu de transfert de chaleur dans la boucle de transfert de chaleur (461) se déplace dans le même sens que le flux dans le premier conduit (210) ; ou en agencement à contre-courant par rapport au premier conduit (210).

14. Système de refroidissement (200, 300) selon la revendication 11, dans lequel le transfert de chaleur provenant du composant générateur de chaleur (201, 202, 203, 204) vers l'échangeur de chaleur (460) se produit à travers un effet radiatif ou conducteur.

15. Éolienne (10) comprenant un système de refroidissement (200, 300) selon l'une quelconque des revendications précédentes, l'éolienne (10) comprenant :
une tour (12) s'étendant à partir d'une surface de support (14) ;
la nacelle (16) montée sur la tour (12) ; et
un rotor (18) accouplé à la nacelle (16).
